# EUROPÄISCHE PATENTSCHRIFT

(11) **EP 1 902 228 B1**
(45) Veröffentlichungstag und Bekanntmachung des Hinweises auf die Patenterteilung: **15.04.2009**
(21) Anmeldenummer: 06762259.7
(22) Anmeldetag: 29.06.2006
(51) Int. Cl.: F16D 65/095

(54) **SCHEIBENBREMSE MIT EINEM AN DER INNENSEITE EINES BREMSSATTELS ABGESTÜTZTEN BREMSBELAG**
DISK BRAKE WITH A BRAKE LINING SUPPORTED ON THE INSIDE OF A BRAKE CALIPER
FREIN A DISQUE COMPORTANT UNE GARNITURE DE FREIN S'APPUYANT SUR LE COTE INTERIEUR D'UN ETRIER DE FREIN

(30) Priorität: 04.07.2005 DE 102005031111
(43) Veröffentlichungstag der Anmeldung: 26.03.2008
(73) Patentinhaber: KNORR-BREMSE SYSTEME FÜR NUTZFAHRZEUGE GMBH, 80809 München (DE)
(72) Erfinder: RAFFIN, Christian, 85630 Grasbrunn (DE)
(74) Vertreter: Mattusch, Gundula
(86) Internationale Anmeldenummer: PCT/EP2006/006286
(87) Internationale Veröffentlichungsnummer: WO 2007/003326

(56) Entgegenhaltungen:
- EP-A- 0 654 615
- DE-A1- 4 036 063
- DE-A1- 4 337 667
- DE-B- 1 253 968

## Beschreibung

Die Erfindung betrifft eine Scheibenbremse nach dem Oberbegriff des Anspruchs 1.

Eine derartige Scheibenbremse ist aus der DE 43 37 667 A1 bekannt. Die in dieser Schrift dargestellte Scheibenbremse ist in dieser Anmeldung in Fig. 3 abgebildet. Die Belagdruckfläche des reaktionsseitigen Bremsbelages wird so bemessen und ausgestaltet, dass bei maximalem Bremsdruck eine Flächenpressung hervorgerufen wird, die zu einer im wesentlichen vollständigen Anlage der Belagdruckfläche des Bremsbelags führt. Eine derartige Auslegung hat sich zwar an sich bewährt. Sie führt aber zu einer relativ massiven Auslegung des Bremssattelrückens im Bereich der Abstützflächen zum Bremsbelag. Angesichts der damit verbundenen Materialkosten und angesichts des erforderlichen Bauraumbedarfs besteht daher weiterer Optimierungsbedarf in Hinsicht auf die Abstützung des reaktionsseitigen Bremsbelags am Bremssattelrücken.

In der DE 40 36 063 A1 ist eine Scheibenbremse geoffenbart, bei der der aktionsseitige Bremsbelag seitlich abgestützt an Vorsprüngen anliegt.

Die DE 12 53 968 B offenbart eine Scheibenbremse, deren beiden Bremsbeläge jeweils durch ein separates Druckelement gegen die Bremsscheibe pressbar sind. Ein reaktionsseitiger Bremsbelag ist hier nicht vorhanden.

Der Erfindung liegt die Aufgabe zugrunde, eine Scheibenbremse der gattungsgemäßen Art so weiterzuentwickeln, dass sie hinsichtlich der Materialkosten und des erforderlichen Bauraums optimiert wird.

Die Erfindung löst diese Aufgabe durch den Gegenstand des Anspruchs 1.

Danach ist die Trägerplatte des reaktionsseitigen Bremsbelags an zwei Bremssattelhörnern abgestützt, die in Richtung der Belagträgerplatte von der Innenwand des Bremssattels vorstehen und vorzugsweise derart ausgestaltet sind, dass bei einer Bremsung die Zuspannkräfte auf den Bremsbelag Kraftkomponenten auf die Abstützhörner erzeugen, die jeweils an diesen ein Drehmoment hervorrufen, das den Bremssattelrücken zwischen den Abstützhörnern entlastet.

Durch die Erfindung kann das Gesamtgewicht des Bremssattels entweder reduziert oder die Biegesteifigkeit und damit die Leistungsfähigkeit erhöht werden, woraus wiederum eine Bauraumreduzierung resultieren kann.

Besonders vorteilhaft ist es, den Effekt der Entlastung des Bremssattelrückens zur Gewichtsreduzierung zu nutzen, da dies nicht nur die Herstellkosten senkt sondern sich auch vorteilhaft auf das Fahrzeug auswirkt, insbesondere, da die ungefederten Massen verringert werden. Die kann wiederum dazu genutzt werden, die Nutzlast des Fahrzeuges zu erhöhen.

Mit der Erfindung ist es zudem möglich, bei geeigneter Dimensionierung den Bauraumbedarf der Scheibenbremse im Bereich des Sattelrückens zu verringern, was sich wiederum auch vorteilhaft auf die Fahrzeugkonstruktion auswirken kann.

Es ist zudem auch vorteilhaft, dass die im Bereich der Abstützflächen erforderliche spanende Bearbeitung des Bremssattels auf sehr geringe Bereiche an den Abstützhörner reduziert werden kann.

Zudem wird auch auf einfache Weise ein fehlerhafter Einbau des Belages mit einer Ausrichtung des Bremsbelages zum Belagsattelrücken und nicht zur Bremsscheibe nahezu ausgeschlossen.

Weitere vorteilhafte Ausgestaltungen sind in den übrigen Unteransprüchen angegeben.

Nachfolgend wird die Erfindung unter Bezug auf die Zeichnung anhand eines Ausführungsbeispiels näher beschrieben. Es zeigt:
Fig. 1 eine Draufsicht auf einen reaktionsseitigen Bereich einer erfindungsgemäßen Scheibenbremse;
Fig. 2 eine Draufsicht auf einen reaktionsseitigen Bereich einer Scheibenbremse nach dem Stand der Technik; und
Fig. 3 einen Schnitt durch eine Scheibenbremse nach dem Stand der Technik zur Veranschaulichung des prinzipiellen Aufbaus einer solchen Scheibenbremse;
Fig. 4 und 5 jeweils eine Draufsicht auf ein weiteres Ausführungsbeispiel auf den reaktionsseitigen Bereich einer erfindungsgemäßen Scheibenbremse.

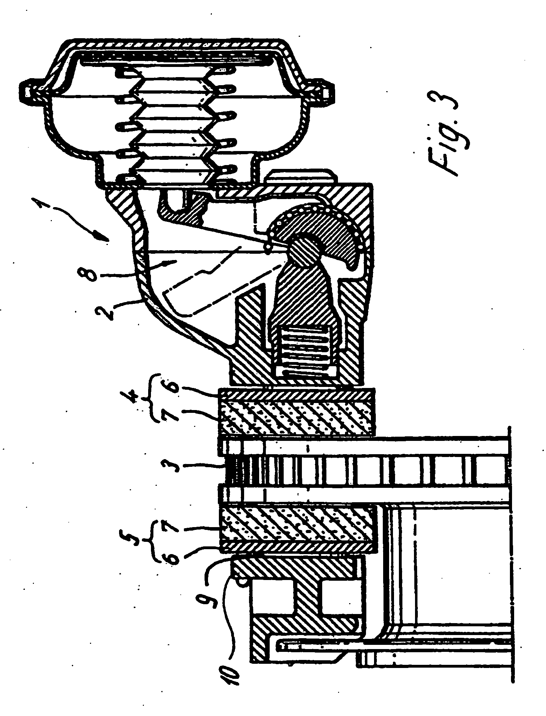

Fig. 3 zeigt in einer vereinfachten Schnittansicht eine Scheibenbremse 1 mit einem als Schiebesattel ausgebildeten Bremssattel 2, der rahmenartig eine Bremsscheibe 3 in ihrem hier oberen Umfangsbereich umgreift.

Auf beiden Seiten der Bremsscheibe sind Bremsbeläge 4, 5 angeordnet, die jeweils eine Trägerplatte 6 und ein darauf angeordnetes Belagmaterial 7 aufweisen, wobei der eine der Bremsbeläge 4 - zuspannseitiger Belag genannt - von einer drehhebelbetätigten Zuspannvorrichtung 8 mittels Druckstücken 9 in Richtung der Bremsscheibe verschieblich ist und wobei der andere Bremsbelag 5 - reaktionsseitiger Bremsbelag genannt - mit seiner Trägerplatte 6 an der Innenfläche des Bremssattelrückens 10 auf der der Zuspannvorrichtung gegenüberliegenden Seite der Bremsscheibe 3 abgestützt ist.

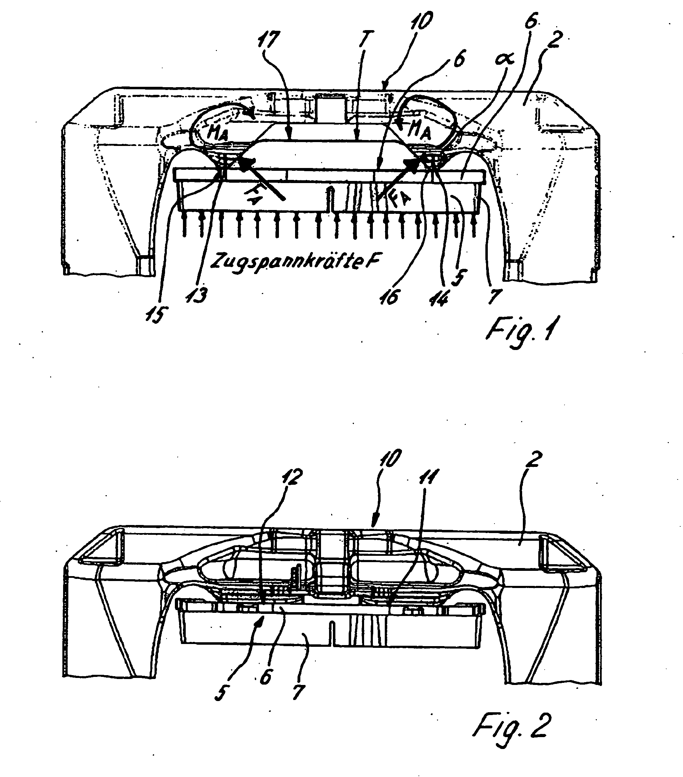

Nach dem Stand der Technik erfolgte diese Abstützung beispielsweise nach Art der Fig. 2, also im wesentlichen großflächig an inneren Abstützflächen 11, 12 des Bremssattels.

An dieser Lösung ist nachteilig, dass der Bremssattelrücken 10 des Bremssattels 2 relativ großen Kräften ausgesetzt wird und von daher entsprechend stabil bzw. massiv ausgeführt werden muß. Demgegenüber schafft es die Erfindung mit einfachen Mitteln, den Bremssattelrücken 10 zu entlasten.

Die Erfindung erreicht dies dadurch, dass die Abstützung der Trägerplatte 6 des reaktionsseitigen Bremsbelages 5 nicht mehr großflächig sondern an zwei Abstützhörnern 13, 14 erfolgt, die, entsprechend dem in der Figur 2 gezeigten Beispiel, gemeinsam zwei zueinander parallele, streifenförmige Abstützflächen 15, 16 von vorzugsweise weniger als 15, insbesondere weniger als 10 mm Breite aufweisen.

Dabei sind die Abstützhörner 13, 14 derart ausgestaltet, dass in einer Draufsicht auf den Bereich zwischen den Abstützhörnern 13, 14 und der Trägerplatte 6 zwischen den Abstützhörnern 13, 14 und der Innenwand 17 zwischen den Abstützhörnern 13, 14 des Bremssattels 2 ein Trapez T ausgebildet wird bzw. eine Trapezform ausgebildet ist.

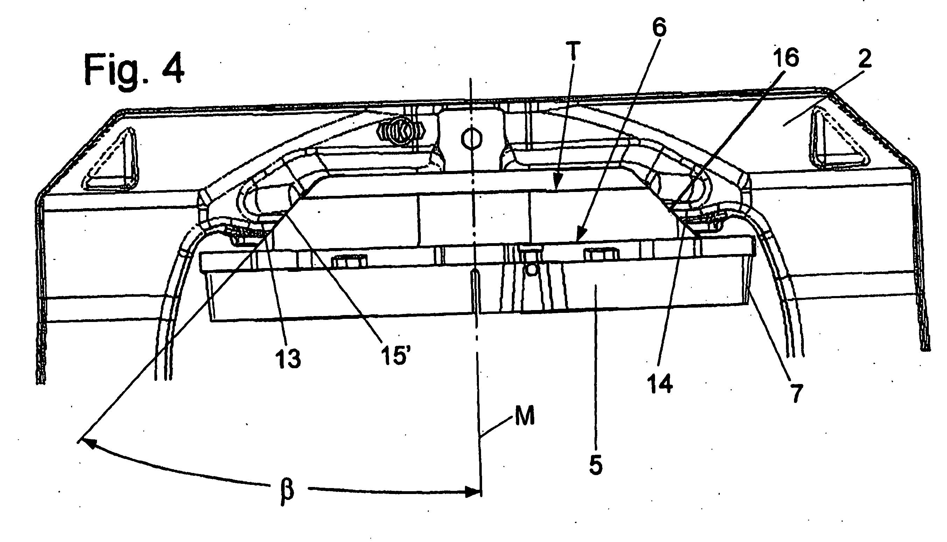

Wie die Figur 4 als weiteres Ausführungsbeispiel wiedergibt, können Abstützflächen 15', 16' durch die sich gegenüberliegenden Schrägen der Abstützhörner 13, 14 gebildet werden, die die Seiten des Trapezes T bilden. Hierdurch wird die Bearbeitung des Bremssattelrückens 10 insgesamt wesentlich vereinfacht, da ein Spiel zwischen den Abstützhörnern 13, 14 und der Trägerplatte 6 problemlos geduldet werden kann.

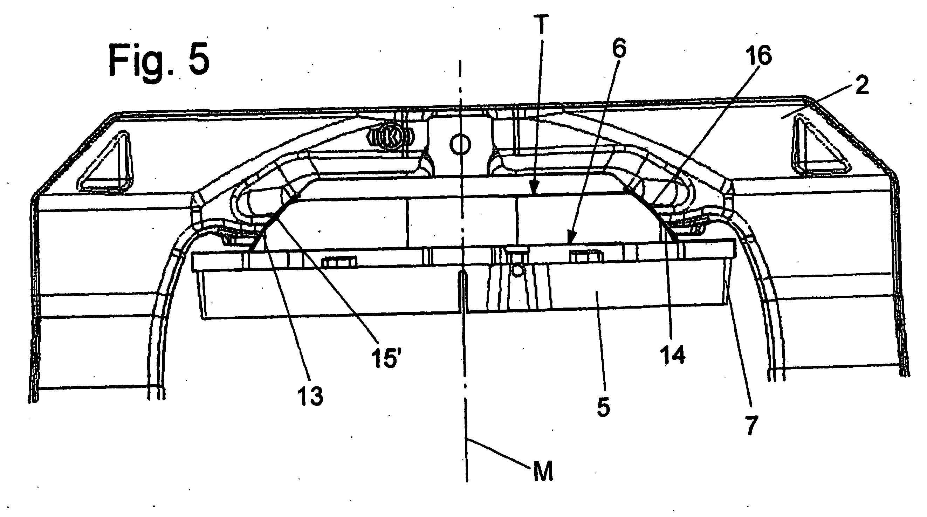

Darüber hinaus ist eine ebene Ausbildung der Abstützflächen 15', 16' nicht zwingend. Vielmehr können die Abstützflächen 15', 16', gemäß dem Ausführungsbeispiel nach Figur 5, konkav geformt sein. Denkbar sind aber auch andere Formen der Abstützflächen 15', 16'.

Im übrigen sind die Abstützflächen 15', 16' vorzugsweise in einem Winkel β zwischen 20° bis 70° zur Bremsscheibenachse M angeordnet.

Die Abstützhörner 13, 14 sind vorzugsweise parallel zueinander ausgerichtet und stehen keilförmig von der Innenwand des Bremssattelrückens 10 zur Belagträgerplatte 6 hin vor. Sie sind ferner vorzugsweise senkrecht zur Bremsscheibenachse ausgerichtet. Der Keilwinkel a der Abstützhörner 13, 14 liegt zwischen 40° und 140°, vorzugsweise 90°.

Das Verhalten dieser Anordnung ist wie folgt.

Bei einer Bremsung wirken die Zuspannkräfte F auf den Bremsbelag 5. Durch die Art der Abstützung der Belagträgerplatte 6 an den Abstützhörnern 13, 14 werden Kraftkomponenten F_{A} auf die Abstützhörner 13, 14 erzeugt, die jeweils an diesen ein Drehmoment M_{y} hervorrufen, was den Bremssattelrücken 10 zwischen den Abstützhörnern 13, 14 entlastet, wobei auch die Trägerplatte 6 einen Teil der Kräfte aufnimmt.

### Bezugszeichen

- Scheibenbremse: 1
- Bremssattel: 2
- Bremsscheibe: 3
- Bremsbeläge: 4, 5
- Trägerplatte: 6
- Belagmaterial: 7
- Zuspannvorrichtung: 8
- Druckstücke: 9
- Bremssattelrücken: 10
- Abstützflächen: 11, 12
- Abstützhörner: 13, 14
- Abstützflächen: 15, 16
- Abstützflächen: 15', 16'
- Innenwand: 17
- Trapez: T
- Keilwinkel: a
- Kraftkomponenten: F_{A}
- Drehmoment: M_{y}
- Bremsscheibenachse: M

## Patentansprüche

1. Scheibenbremse, insbesondere Schiebsattel-Scheibenbremse, mit zwei beidseits einer Bremsscheibe angeordneten Bremsbelägen (4, 5), die jeweils eine Trägerplatte (6) und ein darauf angeordnetes Belagmaterial (7) aufweisen, wobei der eine der Bremsbeläge (4) - zuspannseitiger Bremsbelag genannt - mit wenigstens einem Druckelement einer Zuspannvorrichtung (8) in Richtung der Bremsscheibe verschieblich ist und der andere Bremsbelag auf der anderen Seite der Bremsscheibe (3) - reaktionsseitiger Bremsbelag (5) genannt - rückseitig mit seiner Trägerplatte (6) an der Innenwand des Bremssattelrückens (10) abgestützt ist, **dadurch gekennzeichnet, dass** die Trägerplatte (6) des reaktionsseitigen Bremsbelags (5) mit ihrer Rückseite an zwei Abstützhörnern (13, 14) abgestützt ist, die an der Innenwand des Bremssattels (2) angeordnet und in Richtung der Trägerplatte (6) vorstehen.

2. Scheibenbremse nach Anspruch 1, **dadurch gekennzeichnet, dass** in einer Draufsicht auf den Bereich zwischen den Abstützhörnern (13, 14) und der Trägerplatte (6) zwischen den Abstützhörnern (13, 14) und der Innenwand (17) zwischen den Abstützhörnern (13, 14) des Bremssattels (2) eine Trapezform (T) ausgebildet ist.

3. Scheibenbremse nach Anspruch 1 oder 2, **dadurch gekennzeichnet, dass** die zwei Abstützhörner (13, 14) zwei zueinander parallele, streifenförmige Abstützflächen (15, 16) von vorzugsweise weniger als 15 mm, insbesondere weniger als 10 mm Breite aufweisen.

4. Scheibenbremse nach einem der vorstehenden Ansprüche, **dadurch gekennzeichnet, dass** die Abstützhörner (13, 14) parallel zueinander ausgerichtet sind und keilförmig von der Innenwand des Bremssattelrückens (10) zur Belagträgerplatte (6) hin vorstehen.

5. Scheibenbremse nach einem der vorstehenden Ansprüche, **dadurch gekennzeichnet, dass** der Keilwinkel (α) der Abstützhörner (13, 14) zwischen 40° und 140° liegt und insbesondere 90° beträgt.

6. Scheibenbremse nach einem der vorstehenden Ansprüche, **dadurch gekennzeichnet, dass** die Abstützhörner (13, 14) senkrecht zur Bremsscheibenachse ausgerichtet sind.

7. Scheibenbremse nach einem der vorstehenden Ansprüche, **dadurch gekennzeichnet, dass** die zwei Abstützhörner (13, 14) zwei Abstützflächen (15', 16') aufweisen, die durch die sich gegenüberliegenden schrägen Seiten der Trapezform (T) gebildet sind.

8. Scheibenbremse nach Anspruch 7, **dadurch gekennzeichnet, dass** die Abstützflächen (15', 16') als ebene Flächen ausgebildet sind.

9. Scheibenbremse nach einem der Ansprüche 7 oder 8, **dadurch gekennzeichnet, dass** die Abstützflächen (15', 16') jeweils als eine von einer Ebene abweichenden Fläche, vorzugsweise konkav ausgebildet sind.

10. Scheibenbremse nach einem der Ansprüche 7 bis 9, **dadurch gekennzeichnet, dass** die Abstützflächen (15', 16') in einem Winkel (β) zwischen 20° bis 70° zur Bremsscheibenachse (M) angeordnet sind.

## Claims

1. Disc brake, in particular a sliding-caliper disc brake, with two brake linings (4, 5) arranged on the two sides of a brake disc, each comprising a carrier plate (6) with a lining material (7) attached thereto, such that one of the brake linings (4) - called the application-side brake lining - can be moved by at least one pressure element of an application device (8) towards the brake disc and the other brake lining on the opposite side of the brake disc (3) - called the reaction-side brake lining (5) - is supported at the back with its carrier plate (6) on the inside wall of the brake caliper back (10), **characterised in that** the carrier plate (6) of the reaction-side brake lining (5) is supported with its back against two supporting projections (13, 14), which are located on the inside wall of the brake caliper (2) and project in the direction of the said carrier plate (6).

2. Disc brake according to Claim 1, **characterised in that** in a plan view of the area between the supporting projections (13, 14) and the carrier plate (6) between the supporting projections (13, 14) and the inside wall (17) of the brake caliper (2) between the supporting projections (13, 14) a trapezium shape (T) is formed.

3. Disc brake according to Claims 1 or 2, **characterised in that** the two supporting projections (13, 14) have two mutually parallel, strip-shaped supporting surfaces (15, 16) preferably each less than 15 mm and in particular less than 10 mm wide.

4. Disc brake according to any of the preceding claims, **characterised in that** the two supporting projections (13, 14) are orientated parallel to one another and project as wedges from the inside wall of the brake caliper back (10) towards the lining carrier plate (6).

5. Disc brake according to any of the preceding claims, **characterised in that** the wedge apex angle (α) of the supporting projections (13, 14) is between 40° and 140°, and in particular equal to 90°.

6. Disc brake according to any of the preceding claims, **characterised in that** the supporting projections (13, 14) are orientated perpendicularly to the brake disc axis.

7. Disc brake according to any of the preceding claims, **characterised in that** the two supporting projections (13, 14) have respective supporting surfaces (15', 16'), which are formed by the two opposite inclined sides of the trapezium shape (T).

8. Disc brake according to Claim 7, **characterised in that** the supporting surfaces (15', 16') are flat surfaces.

9. Disc brake according to either of Claims 7 or 8, **characterised in that** the supporting surfaces (15', 16') are each formed as surfaces that are not flat, preferably being of concave shape.

10. Disc brake according to any of Claims 7 to 9, **characterised in that** the supporting surfaces (15', 16') are arranged at an angle (β) between 20° and 70° relative to the brake disc axis X.

## Revendications

1. Frein à disque, en particulier un frein à disque à étrier glissant, comprenant deux garnitures de frein (4, 5) disposées des deux côtés d'un disque de frein, dont chacune comprend un plaque de support (6) et un matériau de garniture (7) y disposé, à une desdites garnitures de frein (4) - nommée garniture de frein du côté de serrage - étant déplaçable avec au moins un élément presseur d'un dispositif de serrage (8) en un sens vers ledit disque de frein et à l'autre garniture de frein de l'autre côté dudit disque de frein (3) - nommée garniture de frein du côté de réaction (5) - s'appuyant, par son plaque de support (6), du côté arrière contre la paroi intérieure du dos de l'étrier de frein (10), **caractérisé en ce que** ledit plaque de support (6) de ladite garniture de frein du côté de réaction (5) s'appuie, par sa face arrière, à deux cornes d'appui (13, 14, qui sont disposées à ladite paroi intérieur dudit étrier de frein (2), en faisant saillie en un sens vers ledit plaque de support (6).

2. Frein à disque selon la revendication 1, **caractérisé en ce qu'**en vue d'en haut sur la zone entre lesdites cornes d'appui (13, 14) et ledit plaque de support (6), une forme trapézoïdale (T) est formée entre lesdites cornes d'appui (13, 14) dudit étrier de frein (2).

3. Frein à disque selon la revendication 1 ou 2, **caractérisé en ce que** lesdites deux cornes d'appui (13, 14) présentent deux surfaces d'appui (15, 16) en bande, l'une en parallèle à l'autre, à une largeur de moins de 16 mm de préférence, en particulier de moins de 10 mm.

4. Frein à disque selon une quelconque des revendications précédentes, **caractérisé en ce que** lesdites cornes d'appui (13, 14) sont orientées l'une en parallèle à l'autre et font saillie, en forme de coin, à partir de ladite paroi intérieure dudit dos de l'étrier de frein (10) vers ledit plaque de support de garniture (6).

5. Frein à disque selon une quelconque des revendications précédentes, **caractérisé en ce que** l'angle tranchant (α) desdites cornes d'appui (13, 14) se trouve dans la gamme entre 40° et 140° et correspond à 90° en particulier.

6. Frein à disque selon une quelconque des revendications précédentes, **caractérisé en ce que** lesdites cornes d'appui (13, 14) sont orientées en sens orthogonal sur l'axe d'un disque de frein.

7. Frein à disque selon une quelconque des revendications précédentes, **caractérisé en ce que** lesdites deux cornes d'appui (13, 14) présentent deux faces d'appui (15', 16') qui sont formées par les côtés obliques en regard l'un de l'autre, de ladite forme trapézoïdale (T).

8. Frein à disque selon la revendication 7, **caractérisé en ce que** lesdites faces d'appui (15', 16') sont configurées en surfaces planaires.

9. Frein à disque selon une quelconque des revendications 7 ou 8, **caractérisé en ce que** chacune desdites faces d'appui (15', 16') est configurée sous forme d'une face en déviation d'un plan, de préférence en forme concave.

10. Frein à disque selon une quelconque des revendications 7 à 9, **caractérisé en ce que** lesdites faces d'appui (15', 16') sont disposées à un angle (β) entre 20° et 70° relativement audit axe d'un disque de frein (M).
